# EUROPÄISCHE PATENTSCHRIFT

(11) **EP 3 599 229 B1**
(45) Veröffentlichungstag und Bekanntmachung des Hinweises auf die Patenterteilung: **30.12.2020**
(21) Anmeldenummer: 19186733.2
(22) Anmeldetag: 17.07.2019
(51) Int. Cl.: C04B 37/00

(54) **REAKTIONSGEFÜGTE KERAMISCHE BAUTEILE UND VERFAHREN ZU IHRER HERSTELLUNG**
REACTION JOINED CERAMIC COMPONENTS AND METHOD FOR THE PRODUCTION THEREOF
COMPOSANTS CÉRAMIQUES RÉACTIFS ET LEUR PROCÉDÉ DE FABRICATION

(30) Priorität: 23.07.2018 DE 102018117738
(43) Veröffentlichungstag der Anmeldung: 29.01.2020
(73) Patentinhaber: Fraunhofer-Gesellschaft zur Förderung der angewandten Forschung e.V., 80686 München (DE)
(72) Erfinder: KUNZE, Steffen, 01309 Dresden (DE); ADLER, Jörg, 01662 Meißen (DE); HEYMER, Heike, 01217 Dresden (DE)
(74) Vertreter: Rauschenbach, Marion

(56) Entgegenhaltungen:
- DE-A1- 19 540 900
- US-A1- 2015 203 412

## Beschreibung

Die Erfindung bezieht sich auf das Gebiet der Keramik und betrifft reaktionsgefügte keramische Bauteile, die unter anderem in tribologisch und/oder chemisch beanspruchten Anwendungen, insbesondere unter hohen Temperaturen, zum Einsatz kommen und ein Verfahren zu ihrer Herstellung.

Entsprechend der DIN 8593 ist das Fügen eine der sechs Hauptgruppen der Fertigungsverfahren. Unter dem Begriff Fügen ist das langfristige Verbinden zweier oder mehrerer fester Körper mit geometrisch bestimmter Gestalt zu verstehen. Dazu zählt insbesondere das Schweißen, Löten und Kleben aber auch das Nieten, Schrauben oder Zusammensetzen.

Gefügte Bauteile weisen eine Verbindung auf, die lösbar, unlösbar oder bedingt lösbar sein kann, oder die als stoffschlüssige, formschlüssige oder kraftschlüssige Verbindungen unterteilt sein können.

Stoffschlüssige Verbindungen werden alle Verbindungen genannt, bei denen die Verbindungspartner durch atomare oder molekulare Kräfte zusammengehalten werden. Sie sind gleichzeitig nichtlösbare Verbindungen, die sich nur durch Zerstörung der Verbindungsmittel trennen lassen. Verfahren zur Herstellung einer stoffschlüssigen Verbindung können Löten, Schweißen, Kleben oder Vulkanisieren sein (Wikipedia, Stichwort Verbindungstechnik).

Stoffschlüssiges Fügen ist ein in der allgemeinen Technik sehr bewährtes Mittel, um arteigene oder artfremde Werkstoffe miteinander zu verbinden. Auch keramische Bauteile lassen sich stoffschlüssig Fügen, beispielsweise durch Kleben mit Kunststoffen oder Löten mit Metallen.

Oftmals besitzen aber die mit derzeitig bekannten Verfahren gefügten Keramiken im Fügebereich nicht ausreichend gute Eigenschaften für ihren Einsatz. Beispielsweise lassen sich Carbidkeramiken durch Klebstoffe, wie Epoxidharze, fügen. Solche Verbindungen besitzen aber für die meisten Anwendungen der Carbidkeramiken keine ausreichende Temperaturstabilität. Lotwerkstoffe sind zwar deutlich temperaturstabiler, besitzen aber dafür oftmals keine ausreichende Chemikalienbeständigkeit. Insbesondere ist ihr Korrosionsverhalten für viele Anwendungen unzureichend.

Hinzu kommt, dass aufgrund der unterschiedlichen Ausdehnungskoeffizienten der Keramiken und Lote im Bereich der Fügezonen mechanische Spannungen beim Abkühlen auftreten. Diese können beispielsweise eine Spannungsrisskorrosion oder Sprödbruch verursachen.

Diffusionsgefügte keramische Bauteile weisen dagegen nicht die Nachteile der Kleb- und Lotverbindungen von Keramiken auf. Diese sind aber nur mit großem technischen Aufwand herstellbar, da sehr hohe Flächenpressungen in Verbindung mit sehr hohen Temperaturen benötigt werden.

Aus der WO 2009/010427 sind diffusionsgefügte keramische Bauteile bekannt, bei denen die Fügezone eine stofflich weitgehend angenäherte chemische Zusammensetzung und einen annähernd gleichen thermischen Ausdehnungskoeffizienten, wie die zu fügenden Basisbauteile, aufweist. Hergestellt werden derartige diffusionsgefügte keramische Bauteile indem zwischen die zu fügenden keramischen Bauteile eine Folie eingebracht wird, die hinsichtlich der Zusammensetzung und des thermischen Ausdehnungskoeffizienten den Forderungen der Fügezone nach der Sinterung entspricht. Die zu fügenden Bauteile mit der Folie werden anschließend einer Temperaturerhöhung unterworfen, bis mindestens die Flüssigphasenreaktion des Folienwerkstoffs realisiert ist und nachfolgend das Bauteil abgekühlt.

Keramische Bauteile werden oft in Rekuperatoren eingesetzt, die bei hohen Temperaturen betrieben werden und korrosiven Medien ausgesetzt sind. Diesen Anforderungen werden beispielsweise Bauteile aus gesintertem Siliciumcarbid (SSiC) gerecht. Aus verfahrens- und fertigungstechnischen Gründen sind Rekuperatoren, wie etwa Plattenwärmetauscher, oft modular aufgebaut. Zur Gewährung der Funktionsfähigkeit müssen die einzelnen Module miteinander dicht gefügt werden. An die Fügenähte und ihre Materialien werden daher hohe Anforderungen gestellt.

Bekannt ist gemäß DE 697 07 283 T2 ein Verfahren zur Zusammenfügung von Werkstoffteilen auf Basis von Siliciumcarbid mit Hilfe einer dicken Verbindungsschicht durch feuerfeste Hartlötung und ein so erhaltener Verbund, bei dem die zu fügenden Flächen der Bauteile mit einem intermetallischen Lot in Kontakt und auf eine Hartlöttemperatur gebracht werden, wobei das intermetallische Lot aus 1 - 18 Gew.-% Kobalt und 82 - 99 Gew.-% Silicium besteht.

Weiter ist aus der DE 10 2006 013 503 A1 ein Plattenwärmetauscher und ein Verfahren zu seiner Herstellung bekannt, bei dem die Platten aus einem gesinterten Keramikmaterial bestehen können, welche mittels eines Diffusionsschweißverfahrens zu einem nahtfreien monolithischen Block verbunden werden.

Gemäß der DE 10 2004 021 424 A1 ist ein Füge- oder Abdichtelement aus einem glasinfiltrierten Keramik- oder Metallkomposit bekannt, bei dem eine poröse Masse, die Teilchen aus Keramik- oder Metall enthält, in Kontakt mit den zu fügenden Flächen der Bauteile gebracht wird, ein Glasmaterial auf die poröse Masse gebracht wird, das Glasmaterial auf Infiltrationstemperatur erwärmt wird, damit das Glas in das Keramik- oder Metallmaterial infiltriert wird, und nachfolgend die Abkühlung des glasinfiltrierten Keramik- oder Metallkomposits mit den Bauteilen erfolgt.

Aus der DE 38 31 812 A1 ist ein Verfahren zur Herstellung komplizierter Bauteile aus Siliciuminfiltriertem Siliciumkarbid bekannt, bei dem das Bauteil aus einfach geformten "grünen" Einzelteilen aus Siliciumcarbid zusammengesetzt wird, die verbleibenden Hohlräume und Spalten mit einer Schlämme aus Siliciumcarbid aufgefüllt werden und das Bauteil in an sich bekannter Weise mit Silicium getränkt und gebrannt wird.

Nach der DE 10 2008 019 556 A1 ist ein Bauteil aus einem Stapel stoffschlüssig gefügter Platten bekannt und ein Verfahren zu dessen Herstellung. Das Bauteil besteht dabei aus mehreren Platten, in welchen Kanalsysteme für Fluidströme vorhanden sind, wobei die Platten aus einem keramischen Werkstoff, wie SiC, SSiC, Al₂O₃, ZrO₂, TiB₂ bestehen, die stoffschlüssig mittels einer mindestens 25 µm dicken Klebstoffschicht aus einem polymeren Klebstoff, wie Epoxid- oder Siliconkleber, gefügt sind.

DE 195 40 900 A1 offenbart ein Verfahren zum Abdichten einer Verbindungsstelle zwischen zwei Formkörpern aus Siliciumcarbid, bei dem an der Verbindungsstelle zwischen die beiden Formkörper elementares Silicium eingebracht wird.

Nachteilig bei den Lösungen des Standes der Technik ist, dass bei allen verschiedenen Fügetechniken von Keramikbauteilen die Fügenaht nachteilige Eigenschaften für das gesamte Bauteil beim nachfolgenden bestimmungsgemäßen Einsatz aufweist, wie unzureichende Temperatur- und/oder Korrosionsbeständigkeit oder mechanische Festigkeit oder das Herstellungsverfahren ist so aufwändig, das eine industrielle Produktion zur Herstellung solcher Bauteile uneffektiv ist.

Aufgabe der vorliegenden Erfindung ist es, reaktionsgefügte keramische Bauteile anzugeben, die ein Material der Fügenaht aufweisen, welches im Wesentlichen gleiche oder annähernd ähnliche Eigenschaften, wie das Material der zu fügenden Bauelemente aufweisen und mit einem einfachen und kostengünstigen Verfahren herstellbar sind.

Die Aufgabe wird durch die in den Ansprüchen angegebene Erfindung gelöst. Vorteilhafte Ausgestaltungen sind Gegenstand der Unteransprüche.

Die erfindungsgemäßen reaktionsgefügten keramischen Bauteile bestehen aus mindestens zwei Bauelementen, die im Bereich ihrer zu fügenden Oberflächen aus mindestens einem dichten Material aus der Werkstoffgruppe der Nichtoxidkeramiken und/oder aus mindestens einem porösen SiC-Werkstoff bestehen und die zu fügenden Oberflächen jeweils stoffschlüssig mit einem dichten Material der Fügenaht verbunden sind, welches aus mindestens 30 Vol.-% Siliciumcarbid und mindestens 8 Vol.-% Silicium besteht, und mindestens eines der Bauelemente mindestens einen höchstens teilweise mit Silicium und/oder einer Siliciumlegierung gefüllten Hohlraum aufweist, der an das Material der Fügenaht grenzt oder das Silicium im Hohlraum ganz oder teilweise an das Material der Fügenaht grenzt.

Vorteilhafterweise sind als keramisches Material Carbidkeramiken, wie drucklos gesintertes SiC (SSiC), heiß (isostatisch) gepresstes SiC (HPSiC, HipSiC), flüssigphasengesintertes SiC (LPSSiC), reaktionsgebundenes siliciuminfiltriertes SiC (SiSiC, RBSiC), Borcarbid (BC), Tantalcarbid (TaC), Titancarbid (TiC), Zirkoncarbid (ZrC), Hafniumcarbid (HfC) und/oder deren Verbindungen wie etwa Tantalhafniumcarbid (Ta₄HfC₅) vorhanden.

Weiterhin vorteilhafterweise sind als keramisches Material poröse SiC-Werkstoffe, wie rekristallisiertes SiC (RSiC), reaktionsgebundenes SiC (RBSiC) oder auch SiC-Composite, wie kohlenstofffaserverstärktes SiC (C_{f}SiC), SiC-faserverstärktes SiC (SiC_{f}SiC) und/oder Diamant-SiC-Composite vorhanden.

Ebenfalls vorteilhafterweise besteht das Material der Fügenaht aus 30 bis 92 Vol.-% Siliciumcarbid und 8 bis 70 Vol.-% Silicium.

Und weiterhin vorteilhafterweise weist das Material der Fügenaht neben Siliciumcarbid und Silicium weiter Kohlenstoff, in Form von Glaskohlenstoff, Graphit, Graphen, Ruß, Diamant und/oder kubisches Siliciumcarbid auf.

Vorteilhaft ist es auch, wenn die Dicke des Materials der Fügenaht 80 - 200 µm beträgt.

Weiterhin vorteilhaft ist es, wenn ein Hohlraum oder eine Vielzahl an Hohlräumen in den keramischen Materialien der Bauelemente vorliegen.

Ebenfalls vorteilhaft ist es, wenn der oder die Hohlräume beliebige Formen aufweisen.

Und auch vorteilhaft ist es, wenn der oder die Hohlräume ausschließlich im Bereich der Fügenaht angeordnet sind und an diese grenzen und/oder, jedoch höchstens teilweise, an Oberflächen der Bauelemente grenzen, die nicht gefügt sind.

Bei dem erfindungsgemäßen Verfahren zur Herstellung von reaktionsgefügten keramischen Bauteilen, werden
- mindestens zwei Bauelemente eingesetzt, die im Bereich ihrer zu fügenden Oberflächen aus mindestens einem dichten keramischen Material aus der Gruppe der Nichtoxidkeramiken und/oder aus mindestens einem porösen SiC-Werkstoff bestehen, und von denen mindestens eines der Bauelemente mindestens teilweise im Bereich der zu fügenden Oberflächen in dem keramischen Material mindestens einen mindestens zur zu fügenden Oberfläche hin offenen Hohlraum aufweist, und
- nachfolgend der oder die Hohlräume mit Silicium und/oder einer Siliciumlegierung gefüllt, und
- danach mindestens eine Schicht oder Folie aus einem mindestens Kohlenstoff-enthaltende Material oder aus mindestens einem Material, welches nach einer Temperaturerhöhung in Kohlenstoff überführt ist, auf mindestens eine der zu fügenden Oberflächen aufgebracht, und
- anschließend die so gefüllten und beschichteten mindestens zwei Bauelemente an ihren zu fügenden Oberflächen in Kontakt gebracht, und
- zusammen einer Temperaturerhöhung bis mindestens über den Schmelzpunkt von Silicium oder der eingesetzten Siliciumlegierung ausgesetzt und nachfolgend abgekühlt.

Vorteilhafterweise werden als keramisches Material der Bauelemente Carbidkeramiken, wie gesintertes SiC (SSiC), heiß (isostatisch) gepresstes SiC (HPSiC, HipSiC), Flüssigphasengesinterts SiC (LPSSiC), reaktionsgebundenes siliciuminfiltriertes SiC (SiSiC, RBSiC), Borcarbid (BC), Tantalcarbid (TaC), Titancarbid (TiC), Zirkoncarbid (ZrC), Hafniumcarbid (HfC) und/oder deren Verbindungen wie etwa Tantalhafniumcarbid (Ta₄HfC₅) eingesetzt.

Ebenfalls vorteilhafterweise werden als keramisches Material der Bauelemente poröse SiC-Werkstoffe, wie rekristallisiertes SiC (RSiC), reaktionsgebundenes SiC (RBSiC) oder auch SiC-Composite, wie kohlenstofffaserverstärktes SiC (C_{f}SiC), SiC-faserverstärktes SiC (SiC_{f}SiC) und/oder Diamant-SiC-Composite eingesetzt.

Weiterhin vorteilhafterweise werden der oder die Hohlräume in den mindestens zwei Bauelementen, die einen oder eine Vielzahl von Hohlräumen in den keramischen Materialien aufweisen und der oder die Hohlräume beliebige Formen aufweisen, mit Silicium und/oder einer Siliciumlegierung mittels Rakeln, Spritzen, Drucken, Pressen, Gießen und/oder Sprühen von Silicium beinhaltenden Suspensionen, Granulaten oder Pulvern in den oder die Hohlräume eingebracht.

Und auch vorteilhafterweise wird eine Schicht oder Folie aus mindestens einem Kohlenstoff oder einem kohlenstoffenthaltenden Material oder aus einem Material, welches nach einer Temperaturerhöhung in Kohlenstoff überführt ist, auf mindestens eine der zu fügenden Oberflächen aufgebracht, wobei noch vorteilhafterweise die Schicht oder die Folie in einer Dicke von 50 bis 1000 µm aufgebracht wird.

Vorteilhaft ist es auch, wenn eine Schicht oder Folie aus Kohlenstoff und aus Phenolharzen, Furanharzen mit oder ohne Anteile von Hexamethylentetramin aufgebracht wird oder es wird eine Schicht oder Folie aus Phenolharzen, Furanharzen mit oder ohne Anteile von Hexamethylentetramin aufgebracht.

Ebenfalls vorteilhaft ist es, wenn eine Schicht oder Folie aus Kohlenstoff oder einem kohlenstoffenthaltenden Material oder aus einem Material, welches nach einer Temperaturerhöhung in Kohlenstoff überführt ist, auf mindestens eine der zu fügenden Oberflächen aufgebracht wird, die mindestens eine Kohlenstoffausbeute von 10 Gew.-% bei Temperaturerhöhung aufweist.

Weiterhin vorteilhaft ist es, wenn die Schichtaufbringung mittels Sprühen, Rakeln, Spritzen, Drucken, Gießen, Dippen, Laminieren und Pressen durchgeführt wird.

Und auch vorteilhaft ist es, wenn eine Schicht oder Folie aus Kohlenstoff oder einem kohlenstoffenthaltenden Material oder aus einem Material, welches nach einer Temperaturerhöhung in Kohlenstoff überführt ist, die weiterhin pulverförmiges Siliciumcarbid aufweist, auf mindestens eine der zu fügenden Oberflächen aufgebracht wird, wobei noch vorteilhafterweise als pulverförmiges Siliciumcarbid ein Siliciumcarbid mit einer maximalen Partikelgröße eingesetzt wird, welche maximal der Hälfte der Dicke des Materials der Fügenaht entspricht.

Mit der erfindungsgemäßen Lösung können erstmals reaktionsgefügte keramische Bauteile angegeben werden, die ein Material der Fügenaht aufweisen, welches im Wesentlichen gleiche oder annähernd ähnliche Eigenschaften, wie das Material der zu fügenden Bauelemente aufweisen und mit einem einfachen und kostengünstigen Verfahren herstellbar sind.

Erreicht wird dies durch reaktionsgefügte keramische Bauteile, die aus mindestens zwei Bauelementen bestehen und an ihren Fügestellen eine dichte Fügenaht aufweisen und damit stoffschlüssig miteinander verbunden sind.

Die mindestens zwei Bauelemente bestehen mindestens im Bereich ihrer zu fügenden Oberflächen aus mindestens einem dichten keramischen Material aus der Gruppe der Nichtoxidkeramiken, insbesondere der Carbidkeramiken und/oder aus mindestens einem porösen SiC-Werkstoff.

Carbidkeramiken können vorteilhafterweise Siliciumcarbid (SiC)-Werkstoffe wie drucklos gesintertes SiC (SSiC), heiß (isostatisch) gepresstes SiC (HPSiC, HIPSiC), flüssigphasengesintertes SiC (LPSSiC) oder reaktionsgebundenes siliciuminfiltriertes SiC sein. Ebenfalls können dies Borcarbid (BC), Tantalcarbid (TaC), Titancarbid (TiC), Zirkoncarbid (ZrC), Hafniumcarbid (HfC) und deren Verbindungen, wie etwa Tantalhafniumcarbid (Ta₄HfC₅), sein.

Poröse SiC-Werkstoffe können vorteilhafterweise rekristallisiertes SiC (RSiC), reaktionsgebundenes SiC (RBSiC) oder auch SiC-Composite, wie kohlenstofffaserverstärktes SiC (C_{f}SiC), SiC-faserverstärktes SiC (SiC_{f}SiC) oder auch Diamant-SiC-Composite sein.

Auch können die mindestens zwei Bauelemente aus unterschiedlichen Materialien bestehen, wie z.B. aus SSiC und SiSiC.

Die mindestens zwei Bauelemente sind an ihren zu fügenden Oberflächen jeweils stoffschlüssig mit einem dichten Material der Fügenaht verbunden.

Dieses Material der Fügenaht besteht aus mindestens 30 Vol.-% Siliciumcarbid und mindestens 8 Vol.-% Silicium, vorteilhafterweise aus 30 bis 92 Vol.-% Siliciumcarbid und 8 bis 70 Vol.-% Silicium, noch vorteilhafterweise aus 60 bis 80 Vol.-% Siliciumcarbid und 20 bis 40 Vol.-% Silicium. Das Material der Fügenaht kann neben Siliciumcarbid und Silicium weiter Kohlenstoff, in Form von Glaskohlenstoff, Graphit, Graphen, Ruß, Diamant und/oder kubisches Siliciumcarbid aufweisen.

Die Dicke des Materials der Fügenaht beträgt vorteilhafterweise 80 - 200 µm. Dabei kann die Dicke des Materials der Fügenaht über die gesamte Fläche der Fügenaht gleich sein, aber auch unterschiedlich, was beispielsweise aufgrund des Herstellungsverfahrens entstehen kann.

Da das Material der Fügenaht als Folie oder Schicht auf die zu fügenden Flächen der Bauelemente und die mit Silicium oder Siliciumlegierung gefüllten Hohlräume aufgebracht worden ist, kann beispielsweise im Falle, dass das Material der Fügenaht als Paste zur Herstellung einer Schicht aufgebracht wird, dabei eine unterschiedlich dicke Fügenaht entstehen.

Es kommt hinzu, dass erfindungsgemäß auch grundsätzlich keine hohen Anforderungen an Gestaltabweichungen, wie etwa die Rauheit der zu fügenden Oberflächen der Bauelemente gestellt werden müssen, da die Schicht oder Folie des Materials der Fügenaht, Oberflächenrauheiten oder andere Gestaltabweichungen bei der Fügung ausfüllt und ausgleicht. Dabei können die Gestaltabweichungen der Oberflächen der zu fügenden Bauelemente bis zur Hälfte der Schicht- oder Foliendicke betragen. Dies ist ein besonderer Vorteil gegenüber den Lösungen des Standes der Technik zum Diffusionsfügen, da es dort zwingend erforderlich ist, die zu fügenden Oberflächen extrem glatt und passgenau vorliegen zu haben. Dies ist entsprechend aufwändig und teuer.

Weiter ist erfindungswesentlich, dass mindestens eines der keramischen Bauelemente mindestens einen höchstens teilweise mit Silicium und/oder einer Siliciumlegierung gefüllten Hohlraum aufweist, der an das Material der Fügenaht grenzt oder das Silicium im Hohlraum ganz oder teilweise an das Material der Fügenaht grenzt.

Dieser Hohlraum kann auch eine Vielzahl von Hohlräumen in den keramischen Bauelementen sein, der oder die in beliebigen Formen vorliegen können.

Die Hohlräume können beispielsweise in Form von umlaufenden Nuten oder einzelnen oder vielen Aussparungen, wie Sacklöcher, im Fügebereich vorliegen, wobei beispielsweise runde, rechteckige, quadratische, halbkreisförmige oder unregelmäßige Querschnitte der Hohlräume vorliegen können.

Dabei müssen erfindungsgemäß der oder die Hohlräume, wenn sie nicht mehr oder nur noch teilweise mit Silicium und/oder einer Siliciumlegierung gefüllt sind, mindestens mit einer Seite an das Material der Fügenaht grenzen. Im Falle, dass die Hohlräume noch teilweise mit Silicium oder einer Siliciumlegierung gefüllt sind, kann auch das Silicium oder einer Siliciumlegierung ganz oder teilweise an das Material der Fügenaht grenzen.

Es muss erfindungsgemäß gesichert sein, dass das vorher in dem oder den Hohlräumen befindliche Silicium oder Siliciumlegierung während einer Temperaturerhöhung mit dem Material, welches das Material der Fügenaht bildet in direkten stofflichen Kontakt treten kann.

Das in den Hohlräumen befindliche Silicium oder Siliciumlegierung muss nicht von vornherein mit dem im Bereich der Fügenaht vorhandenen Material der Schicht oder Folie aus einem mindestens Kohlenstoff-enthaltende Material oder aus mindestens einem Material, welches nach einer Temperaturerhöhung mindestens teilweise in Kohlenstoff überführt ist, im stofflichen Kontakt stehen. Es ist auch möglich, dass dies erst während einer Temperaturerhöhung realisiert wird, wenn die Siliciumpartikel aufschmelzen.

Es ist aber durchaus von Vorteil, wenn zumindest Teile des in den Hohlräumen befindlichen Siliciums oder Siliciumlegierung von Anfang an im stofflichen Kontakt mit dem Material der Schicht oder Folie aus einem mindestens Kohlenstoff-enthaltende Material oder aus mindestens einem Material, welches nach einer Temperaturerhöhung mindestens teilweise in Kohlenstoff überführt ist, steht.

Weiterhin müssen die Hohlräume auch nicht ausschließlich im Bereich der Fügenaht angeordnet sein und an diese grenzen, sie können auch, jedoch höchstens teilweise, an Oberflächen der Bauelemente grenzen, die nicht gefügt sind, beispielsweise am Ende einer Fügenaht.

Dies ist erforderlich, da bei der Herstellung des Materials der Fügenaht vorher eine Schicht oder Folie aus einem mindestens Kohlenstoff enthaltenem Material oder aus mindestens einem Material, welches nach einer Temperaturerhöhung mindestens teilweise in Kohlenstoff überführt ist, auf mindestens eine der zu fügenden Oberflächen aufgebracht wird, und dann dieses Material einer Temperaturerhöhung bis über den Schmelzpunkt von Silicium oder der Siliciumlegierung ausgesetzt wird. Dabei schmilzt das Silicium auf und steht dem in der Schicht oder Folie vorhandenen Kohlenstoff zur Bildung von Siliciumcarbid zur Verfügung.

Als Materialien, die nach einer Temperaturerhöhung mindestens teilweise in Kohlenstoff überführt sind, sollen erfindungsgemäß solche Materialien verstanden werden, die durch eine thermische und/oder chemische Spaltung unter Ausgasung flüchtiger Verbindungen oder Elemente in Kohlenstoff überführt werden können. Als solche Materialien eignen sich insbesondere Kunststoffe oder Biopolymere, wie etwa Phenolharz oder Lignin. Während einer Pyrolyse unter Vakuum oder Schutzgas, wie etwa Stickstoff oder Argon, wandeln sich diese Polymere unter Ausgasung flüchtiger Bestandteile zu einem amorphen Kohlenstoff um. Die Volumen- und Masseschwindungen während dieses Prozesses führen dabei zur Ausbildung von Poren in der kohlenstoffhaltigen Fügezone.

Dabei kann eine Schicht oder Folie aus Kohlenstoff oder einem kohlenstoffenthaltenden Material oder aus einem Material, welches nach einer Temperaturerhöhung mindestens teilweise in Kohlenstoff überführt ist, und ebenfalls pulverförmiges Siliciumcarbid aufweist, auf mindestens eine der zu fügenden Oberflächen aufgebracht werden. Als pulverförmiges Siliciumcarbid kann ein Siliciumcarbid mit einer maximalen Partikelgröße eingesetzt werden, welche maximal der Hälfte der Dicke des Materials der Fügenaht entspricht.

Eine solche Vorgehensweise ist besonders vorteilhaft, da die aufgebrachten Schichten oder Folien Kunststoffe enthalten können, die bei der Herstellung und dem nachfolgenden Handling der Schichten oder Folien vorteilhaft sind und beispielsweise als Kleber wirken und/oder für das Aufbringen auf die zu fügenden Flächen der Bauelemente einen passgenauen Zuschnitt der Schichten oder Folien erlauben .

Weiterhin wird mit der nachfolgenden Temperaturerhöhung zum Fügen der Bauelemente in jedem Fall die Temperatur für die Pyrolyse der Kunststoffe erreicht, so dass dazu kein gesonderter Verfahrensschritt erforderlich ist. Während des Aufheizens der an den Fügeflächen zusammengeführten Bauelemente erfolgt die Umwandlung der Kunststoffe in der Fügenaht zu porösem Kohlenstoff, der bei weiterer Temperaturerhöhung mit dem vorhandenen Silicium zu Siliciumcarbid reagiert. Insbesondere das in dem oder den Hohlräumen befindliche Silicium schmilzt auf und verteilt sich in der porösen Kohlenstoffschicht und führt zu einer Reaktionsbindung der Fügenaht mit den beteiligten Bauelementen zu den erfindungsgemäßen reaktionsgebundenen keramischen Bauteilen.

Das durch Kapillareffekte und/oder schwerkraftunterstützt in den porösen Kohlenstoff einfließende Silicium oder die Siliciumlegierung reagiert mit dem Kohlenstoff zu Siliciumcarbid. Die Dichte des porösen Kohlenstoffs muss unterhalb eines Wertes von 0.96 g/cm³ liegen, vorteilhafterweise zwischen 0,8 - 0.9 g/cm³. Wenn die Dichte des porösen Kohlenstoffs höher als 0,96 g/cm³ ist, kommt es beim Einströmen des Siliciums oder Siliciumlegierung aufgrund von Volumenausdehnungsprozessen während der Reaktion von Kohlenstoff mit Silicium zu Siliciumcarbid zu einem Abschluss der Kapillaren. Dies würde ein weiteres Einfließen von Silicium oder der Siliciumlegierung verhindern.

Die Anzahl und Größe der Hohlräume im Bereich der zu fügenden Flächen von Bauelementen richtet sich in erster Linie nach der Geometrie und den Abmessungen der zu fügenden Flächen, der Fügenahthöhe sowie der Zusammensetzung des Materials der Fügenaht.

Gemäß der erfindungsgemäßen Lösung soll unter den Hohlräumen solche verstanden werden, die nicht-bestimmungsgemäße Hohlräume der jeweils zu fügenden Bauelemente sind. So weist beispielsweise ein SiC-Kreuzstromwärmetauscher viele offene Kanäle und Kavitäten auf, die auch Restsilicium aus dem Herstellungsprozess enthalten können. Diese bestimmungsgemäßen Hohlräume sollen und werden nicht als erfindungsgemäße Hohlräume mit Silicium oder Siliciumlegierung gefüllt.

Die bestimmungsgemäßen Hohlräume in einem Bauteil sollen gemäß ihrer jeweiligen Funktion Hohlraume sein und bleiben, und nicht beispielsweise Residuen an überschüssigem Silicium beinhalten.

Hinzu kommt, dass die bestimmungsgemäßen Hohlräume Abmessungen aufweisen, die ihrer Bestimmung entsprechen und in der Regel deutlich größer sind, als die erfindungsgemäßen Hohlräume, die nur so groß eingebracht werden und vorhanden sind, wie dies absolut nötig ist für die Aufnahme der gewünschten Menge an Silicium oder Siliciumlegierung.

Um eine dichte reaktionsgebundene Fügenaht zu erreichen, ist es erforderlich, dass möglichst der gesamte Kohlenstoff in der Fügenaht vollständig mit dem vorliegenden Silicium zu Siliciumcarbid reagiert. Außerdem ist es zur Gewährleistung der Dichtheit der Fügezone notwendig, dass ausreichend Silicium zur Verfügung steht, um die nach der Reaktion verbleibenden Restporen auszufüllen.

Es ist jedoch für den Fachmann kein Problem anhand der Abmessungen der aufgebrachten Schicht oder Folie aus einem mindestens Kohlenstoff-enthaltende Material oder aus mindestens einem Material, welches nach einer Temperaturerhöhung mindestens teilweise in Kohlenstoff überführt ist, die Menge an vorhandenem oder sich bildendem Kohlenstoff sowie die entstehende Porosität zu bestimmen und danach auch das benötigte Silicium zu berechnen.

Die meisten Kunststoffe, die für die Pyrolyse der Schicht oder Folien eingesetzt werden können, haben Kohlenstoffausbeuten nach der Pyrolyse von 10 bis 50 % bezüglich ihres Gewichtes (Gew.-%). Damit ist die Ermittlung des benötigten Siliciums für den Fachmann einfach möglich.

Durch die an sich bekannte Reaktion zur SiC-Bildung erfolgt die Reaktionsbindung der mindestens beiden Bauelemente.

Die erfindungsgemäß vorliegende Fügenaht der reaktionsgefügten keramischen Bauelemente ist dicht und weist im Wesentlichen keine Poren oder keine offenen Poren auf. Auch ist die Fügenaht sehr temperaturstabil, mindestens bis Temperaturen von 1300 °C.

Durch diese Eigenschaften der Fügenaht können die erfindungsgemäßen reaktionsgefügten keramischen Bauteile insbesondere für Anwendungen im Hochtemperaturbereich, wie für Wärmetauscher, chemische Reaktoren oder auch für Druck- und Vakuumanlagen eingesetzte werden.

Erfindungsgemäß hergestellt werden die erfindungsgemäßen reaktionsgefügten keramischen Bauteile indem mindestens zwei Bauelemente eingesetzt werden, die im Bereich ihrer zu fügenden Oberflächen aus mindestens einem keramischen Material aus der Gruppe der Nichtoxidkeramiken, insbesondere der Carbidkeramiken, bestehen und von denen mindestens eines der Bauelemente mindestens teilweise im Bereich der zu fügenden Oberflächen in dem keramischen Material mindestens einen mindestens zur zu fügenden Oberfläche hin offenen Hohlraum aufweist.

Vorteilhafterweise wird als keramisches Material drucklos gesintertes SiC (SSiC), heiß (isostatisch) gepresstes SiC (HPSiC, HIPSiC), flüssigphasengesintertes SiC (LPSSiC) oder reaktionsgebundenes siliciuminfiltriertes SiC, rekristallisiertes SiC (RSiC), reaktionsgebundenes SiC (RBSiC), SiC-Composite, wie kohlenstofffaserverstärktes SiC (C_{f}SiC), SiC-faserverstärktes SiC (SiC_{f}SiC) oder Diamant-SiC-Composite, Borcarbid (BC), Tantalcarbid (TaC), Titancarbid (TiC), Zirkoncarbid (ZrC), Hafniumcarbid (HfC) und deren Verbindungen, wie etwa Tantalhafniumcarbid (Ta₄HfC₅) eingesetzt. Auch können die mindestens zwei Bauelemente aus unterschiedlichen Materialien eingesetzt werden, wie z.B. SSiC und SiSiC.

Die erfindungsgemäß notwendigen Hohlräume in den mindestens zwei Bauelementen können ein oder eine Vielzahl von Hohlräumen sein, die in beliebige Formen vorhanden sein können.

Diese Hohlräume werden erfindungsgemäß mit Silicium und/oder einer Siliciumlegierung möglichst vollständig gefüllt. Als Füllverfahren eignen sich insbesondere Rakeln, Spritzen, Drucken, Pressen, Gießen und Sprühen von Silicium beinhaltenden Suspensionen, Pasten, Granulaten oder Pulvern.

Die notwendige Menge an Silicium oder Siliciumlegierung determiniert die Größe und Anzahl der Hohlräume, wobei die notwendige Menge bestimmt wird von der Geometrie und den Abmessungen der zu fügenden Flächen, der Fügenahthöhe sowie der Zusammensetzung des Materials der Fügenaht.

Abhängig von der Kornverteilung der verwendeten Siliciumpulver können diese mit einer hohen Packungsdichte, die sich definiert als das genutzte Volumen der Gesamtheit der Si-Pulver dividiert durch das benutzte Volumen des verwendeten Hohlraumes, zwischen 0,5 - 0,7 verfüllt werden.

Die Packungsdichte definiert sich als Volumen 1 durch Volumen 2, ist einheitslos und besitzt Werte zwischen 0 und 1.

Mit Hilfe der über das gewählte Applikationsverfahren erzielten Packungsdichte sowie des Volumens der Hohlräume kann die Masse an einfüllbaren Silicium einfach bestimmt werden.

Zur Gewährleistung der notwendigen Menge an Silicium, die für die Reaktionsbindung notwendig ist, eignet sich zur Überprüfung der Verfüllbedingungen vorwiegend die Ermittlung der Masse des in den Hohlraum verfüllten Siliciums oder Siliciumlegierung.

Nachfolgend erfolgt die Aufbringung der mindestens einen Schicht oder Folie aus einem mindestens Kohlenstoff-enthaltendem Material oder aus mindestens einem Material, welches nach einer Temperaturerhöhung mindestens teilweise in Kohlenstoff überführt ist, auf mindestens eine der zu fügenden Oberflächen.

Dabei ist es von Vorteil, wenn aus den Materialien eine Schicht oder Folie hergestellt wird und diese direkt auf die zu fügenden Flächen der Bauelemente oder vorab hergestellt und dann auf die Abmessungen der zu fügenden Flächen zugeschnitten wird. Weiterhin ist es vorteilhaft, wenn die Schicht oder Folie klebende Wirkungen aufweisen, da damit das Handling der an den Fügeflächen zusammengeführten Bauelemente vereinfacht wird.

Nachdem die Schicht oder Folie auf mindestens einer der zu fügenden Flächen mindestens eines der zu fügenden Bauelemente angeordnet ist, werden die zu fügenden Bauelemente an ihren zu fügenden Oberflächen in Kontakt gebracht und zusammengeführt. Dabei kann auch Druck auf die Bauelemente ausgeübt werden.

Anschließend werden die aus zusammengeführten Bauelementen bestehenden Bauteile zusammen einer Temperaturerhöhung bis mindestens über den Schmelzpunkt von Silicium oder der eingesetzten Siliciumlegierung ausgesetzt und nachfolgend abgekühlt.

Das Aufheizen auf die erforderliche Temperatur kann dabei kontinuierlich oder diskontinuierlich erfolgen.

Das Aufheizen auf die erforderliche Temperatur erfolgt unter Sauerstoffabschluss im Vakuum oder in Schutzgas, wie etwa Stickstoff oder Argon, oder in einer Kombination von beidem.

Im Fall des Vorhandenseins von Materialien in der Schicht oder Folie, bei welchen nach einer Temperaturerhöhung mindestens teilweise in Kohlenstoff überführt ist, kann bei dem Aufheizen der Bauelemente an den Pyrolysetemperaturen der vorhandenen Kunststoffe oder Biopolymere eine Haltezeit zu möglichst vollständigen Überführung des Kunststoffes oder Biopolymers in Kohlenstoff realisiert werden. Der Temperaturbereich bei dem sich die Kunststoffe oder Biopolymere mindestens teilweise in Kohlenstoff überführen lassen, liegt zwischen 200 und 800 °C.

Solche vorteilhaften Materialien, die nach einer Temperaturerhöhung mindestens teilweise in Kohlenstoff überführt sind, können Kunststoffe oder Biopolymere, wie Phenolharze, Furanharze oder Lignin mit oder ohne weitere Bindemittel sein. Vorteilhaft sind auch Kunststoffe oder Biopolymere, die bei Temperaturerhöhung thermoplastische Eigenschaften zeigen und aufschmelzen, wie thermoplastisches Phenolharz (Novolak). Aber auch duromere Kunststoffe können eingesetzt werden, wie beispielsweise ein mit Hexamethylentetramin (HMTA) vernetzter Novolak.

Mit dem erfindungsgemäßen Verfahren können erfindungsgemäße reaktionsgefügte keramische Bauteile hergestellt werden, die die Vorteile aufweisen, dass es bei ihrer Herstellung nicht zu einem Bauteilverzug infolge von Kriechprozessen der Materialien kommt, wodurch die Maßhaltigkeit der gefügten Bauteile sehr gut ist und Nachbearbeitungen nicht erforderlich sind.

Gegenüber diffusionsgefügten keramischen Bauteilen ist einerseits eine breitere Materialpalette der zu fügenden Bauelemente möglich und andererseits erfolgt die Reaktionsfügung bei geringeren Temperaturen - erfindungsgemäß bei 1414 °C - maximal 1700 °C - im Gegensatz zu mindestens 2000 °C beim Diffusionsfügen.

Nachfolgend wird die Erfindung an mehreren Ausführungsbeispielen näher erläutert.

### Beispiel 1

Zwei Platten mit den Kantenlängen von je 100 mm und Dicken von 10 mm, von denen eine aus gesintertem Siliciumcarbid (SSiC) und die andere aus flüssigphasengesintertem Siliciumcarbid (LPS-SiC) bestehen, sollen miteinander auf Stoß gefügt werden.

In die LPS-SiC Platte wird in der Mitte der zu fügenden Fläche eine 2 x 2 mm² tiefe Nut als Hohlraum entlang der gesamten Kantenlänge von 100 mm mittels eines Schleifprozesses eingebracht. Anschließend wird ein Siliciumpulver mit einer Maximalkorngröße von 500 µm in wässriger Suspension in die Nut eingefüllt und getrocknet. Auf diese Weise wird Silicium mit einer Masse von 0,6 g in die Nut eingefüllt.

Auf die zu fügende Fläche der SSiC Keramik wird eine Suspension aus einem in Alkohol gelöstem Polyvinylbutyral (PVB) mit 15 Gew.-% Grafitpartikeln mit einem mittleren Durchmesser von 10 µm und 50 Gew.-% SiC-Partikeln mit einem mittleren Durchmesser von 50 µm durch einen Dippvorgang aufgetragen. Die Prozentangaben an Graphit- und SiC-Partikeln beziehen sich auf die Masse des Fügemediums nach dem Ausdünsten des Lösemittels. Die Dicke der aufgedippten Schicht beträgt nach dem Ausgasen des Lösemittels 100-150 µm.

Von Vorteil ist hierbei, dass die Gestaltabweichungen insbesondere bezüglich der Oberflächenrauheiten, Rillen, Wellen und Formabweichungen im SSiC durch die Beschichtung aus Graphit- und SiC-Partikeln ausgeglichen werden.

Im Anschluss werden die zu fügenden Flächen der beiden Keramiken Druck- und temperaturunterstützt miteinander gefügt.

Dabei wird eine Flächenpressung von 5 MPa ausgeübt. Die Fügetemperatur beträgt 220 °C und liegt damit über der Schmelztemperatur des thermoplastischen Werkstoffs PVB. Nach diesem Fügen sind die beiden Keramiken quasi "miteinander verklebt" und lassen sich als Verbund handhaben.

Anschließend erfolgt die Umwandlung des PVB in einem ersten Pyrolyseschritt unter Stickstoffatmosphäre bei bis zu 800 °C. Dabei erfolgt eine thermochemische Aufspaltung des PVB. Unter der Ausgasung flüchtiger Verbindungen oder Elemente wird der Thermoplast in Kohlenstoff überführt. Die Kohlenstoffausbeute des PVB liegt hierbei bei unter 10% im Vergleich zum Ausgangsgewicht.

Es entsteht eine poröse Fügeschicht bestehend aus mit Kohlenstoff gebundenem Siliciumcarbid.

Im Anschluss erfolgt die Reaktionsbindung bei Temperaturen oberhalb der Schmelztemperatur von Silicium unter Vakuum. Das in der Nut im LPSSiC eingebrachte Silicium schmilzt auf und dringt in die Poren der porösen Fügeschicht ein. Dabei reagiert es mit dem vorhandenen Kohlenstoff zu einer kubischen SiC-Phase. Das Ergebnis der Reaktionsbindung ist eine dichte Fügenaht bestehend aus SiC und freiem Silicium. In der Nut im LPSSiC, die das Silicium bevorratete, befinden sich hingegen nur noch Residuen an überschüssigem Silicium.

### Beispiel 2

Ein Bauteil zur Wärmerückgewinnung soll aus zwei gesinterten SiC-Halbzeugen durch Fügen hergestellt werden. Die zu fügende Grundfläche der beiden Bauelemente beträgt 100 cm². In die Oberfläche eines der Halbzeuge werden 5 Hohlräume eingebracht. Die Hohlräume haben ein Volumen von 6,7 cm³ und werden als Siliciumreservoir genutzt. Die Masse an Silicium, das als Paste in die Hohlräume eingefüllt wird, beträgt 10,9 g.

Eine Folie, die aus 20 Gew.-% Bindemittel, 13 Gew.-% Weichmacher und Stellmittel und zu weiteren 67 Gew.-% aus Siliciumcarbidpartikeln besteht, wird als Material eingesetzt, welches nach einer Temperaturerhöhung in ein Kohlenstoff-enthaltendes Material überführt ist. Das Bindemittel, besteht aus einer Mischung aus Phenolharz (PF) und Polyvinylbutyral (PVB).

Die Folie hat eine Dicke von 200 µm und wird auf die zu fügende Fläche der Bauelemente zugeschnitten. Der Zuschnitt erfolgt mittels Laserschneiden. Die Folie wird auf das Halbzeug, mit den Silicium-gefüllten Hohlräumen angeordnet und anschließend mit dem zweiten Bauteil bedeckt. Der Aufbau wird mit 50 kN verspannt, was einer Pressung von 5 MPa auf die zu fügende Fläche entspricht. Der Verbund wird anschließend bei 220 °C für 2 Stunden lang getempert. Dabei schmelzen die Bindemittel in der Folie auf und verbinden die beiden Halbzeuge stoffschlüssig.

Anschließend erfolgt die Umwandlung des Phenolharzes und des PVB der Folie in einem ersten Pyrolyseschritt unter Stickstoffatmosphäre bei bis zu 800 °C. Dabei erfolgt eine thermochemische Aufspaltung des Phenolharzes und des PVB. Unter der Ausgasung flüchtiger Verbindungen oder Elemente werden die Polymere in einen Kohlenstoff überführt. Die Kohlenstoffausbeute des PVB liegt hierbei bei unter 10% im Vergleich zum Ausgangsgewicht. Hingegen beträgt die Kohlenstoffausbeute des Phenolharzes 50 % im Vergleich zu dessen Ausgangsgewicht. Insgesamt werden 30 Gew.-% des Bindemittels in Kohlenstoff überführt. Es entsteht auf diese Weise eine poröse Fügeschicht, bestehend aus Kohlenstoff und Siliciumcarbidpartikeln.

Im Anschluss erfolgt die Reaktionsbindung bei einer Temperatur bis 1650 °C unter Vakuum. Das in der Nut im SiC-Bauelement eingebrachte Silicium schmilzt auf und dringt in die Poren der porösen Fügeschicht ein. Dabei reagiert das Silicium mit dem vorhandenen Kohlenstoff zu einer kubischen SiC-Phase.

Das Ergebnis der Reaktionsbindung ist eine dichte Fügenaht bestehend aus SiC und freiem Silicium. In der Nut im SiC-Bauelement, welches das Silicium bevorratete, befinden sich hingegen nur noch Residuen an überschüssigem Silicium.

## Patentansprüche

1. Reaktionsgefügte keramische Bauteile, die aus mindestens zwei Bauelementen bestehen, die im Bereich ihrer zu fügenden Oberflächen aus mindestens einem dichten Material aus der Werkstoffgruppe der Nichtoxidkeramiken und/oder aus mindestens einem porösen SiC-Werkstoff bestehen und die zu fügenden Oberflächen jeweils stoffschlüssig mit einem dichten Material der Fügenaht verbunden sind, welches aus mindestens 30 Vol.-% Siliciumcarbid und mindestens 8 Vol.-% Silicium besteht, und mindestens eines der Bauelemente mindestens einen höchstens teilweise mit Silicium und/oder einer Siliciumlegierung gefüllten Hohlraum aufweist, der an das Material der Fügenaht grenzt oder das Silicium im Hohlraum ganz oder teilweise an das Material der Fügenaht grenzt.

2. Bauteile nach Anspruch 1, bei denen als keramisches Material Carbidkeramiken, wie drucklos gesintertes SiC (SSiC), heiß (isostatisch) gepresstes SiC (HPSiC, HipSiC), flüssigphasengesintertes SiC (LPSSiC), reaktionsgebundenes siliciuminfiltriertes SiC (SiSiC, RBSiC), Borcarbid (BC), Tantalcarbid (TaC), Titancarbid (TiC), Zirkoncarbid (ZrC), Hafniumcarbid (HfC) und/oder deren Verbindungen wie etwa Tantalhafniumcarbid (Ta₄HfC₅) vorhanden sind.

3. Bauteile nach Anspruch 1, bei denen als keramisches Material poröse SiC-Werkstoffe, wie rekristallisiertes SiC (RSiC), reaktionsgebundenes SiC (RBSiC) oder auch SiC-Composite, wie kohlenstofffaserverstärktes SiC (C_{f}SiC), SiC-faserverstärktes SiC (SiC_{f}SiC) und/oder Diamant-SiC-Composite vorhanden sind.

4. Bauteile nach Anspruch 1, bei denen das Material der Fügenaht aus 30 bis 92 Vol.-% Siliciumcarbid und 8 bis 70 Vol.-% Silicium besteht, und/oder das Material der Fügenaht neben Siliciumcarbid und Silicium weiter Kohlenstoff, in Form von Glaskohlenstoff, Graphit, Graphen, Ruß, Diamant und/oder kubisches Siliciumcarbid aufweist.

5. Bauteile nach Anspruch 1, bei denen die Dicke des Materials der Fügenaht 80 - 200 µm beträgt.

6. Bauteile nach Anspruch 1, bei denen ein Hohlraum oder eine Vielzahl an Hohlräumen in den keramischen Materialien der Bauelemente vorliegen, wobei der oder die Hohlräume beliebige Formen aufweisen können.

7. Bauteile nach Anspruch 1, bei denen der oder die Hohlräume ausschließlich im Bereich der Fügenaht angeordnet sind und an diese grenzen und/oder, jedoch höchstens teilweise, an Oberflächen der Bauelemente grenzen, die nicht gefügt sind.

8. Verfahren zur Herstellung von reaktionsgefügten keramischen Bauteilen, bei dem
- mindestens zwei Bauelemente eingesetzt werden, die im Bereich ihrer zu fügenden Oberflächen aus mindestens einem dichten keramischen Material aus der Gruppe der Nichtoxidkeramiken und/oder aus mindestens einem porösen SiC-Werkstoff bestehen, und von denen mindestens eines der Bauelemente mindestens teilweise im Bereich der zu fügenden Oberflächen in dem keramischen Material mindestens einen mindestens zur zu fügenden Oberfläche hin offenen Hohlraum aufweist, und
- nachfolgend der oder die Hohlräume mit Silicium und/oder einer Siliciumlegierung gefüllt werden, und
- danach mindestens eine Schicht oder Folie aus einem mindestens Kohlenstoff-enthaltende Material oder aus mindestens einem Material, welches nach einer Temperaturerhöhung in Kohlenstoff überführt ist, auf mindestens eine der zu fügenden Oberflächen aufgebracht wird, und
- anschließend die so gefüllten und beschichteten mindestens zwei Bauelemente an ihren zu fügenden Oberflächen in Kontakt gebracht werden, und
- zusammen einer Temperaturerhöhung bis mindestens über den Schmelzpunkt von Silicium oder der eingesetzten Siliciumlegierung ausgesetzt und nachfolgend abgekühlt werden.

9. Verfahren nach Anspruch 8, bei dem als keramisches Material der Bauelemente Carbidkeramiken, wie gesintertes SiC (SSiC), heiß (isostatisch) gepresstes SiC (HPSiC, HipSiC), Flüssigphasengesinterts SiC (LPSSiC), reaktionsgebundenes siliciuminfiltriertes SiC (SiSiC, RBSiC), Borcarbid (BC), Tantalcarbid (TaC), Titancarbid (TiC), Zirkoncarbid (ZrC), Hafniumcarbid (HfC) und/oder deren Verbindungen wie etwa Tantalhafniumcarbid (Ta₄HfC₅) und/oder als keramisches Material der Bauelemente poröse SiC-Werkstoffe, wie rekristallisiertes SiC (RSiC), reaktionsgebundenes SiC (RBSiC) oder auch SiC-Composite, wie kohlenstofffaserverstärktes SiC (C_{f}SiC), SiC-faserverstärktes SiC (SiC_{f}SiC) und/oder Diamant-SiC-Composite eingesetzt werden.

10. Verfahren nach Anspruch 8, bei dem der oder die Hohlräume in den mindestens zwei Bauelementen, die einen oder eine Vielzahl von Hohlräumen in den keramischen Materialien aufweisen und der oder die Hohlräume beliebige Formen aufweisen, mit Silicium und/oder einer Siliciumlegierung mittels Rakeln, Spritzen, Drucken, Pressen, Gießen und/oder Sprühen von Silicium beinhaltenden Suspensionen, Granulaten oder Pulvern in den oder die Hohlräume eingebracht werden.

11. Verfahren nach Anspruch 8, bei dem eine Schicht oder Folie aus mindestens einem Kohlenstoff oder einem kohlenstoffenthaltenden Material oder aus einem Material, welches nach einer Temperaturerhöhung in Kohlenstoff überführt ist, auf mindestens eine der zu fügenden Oberflächen aufgebracht wird, wobei vorteilhafterweise die Schicht oder die Folie in einer Dicke von 50 bis 1000 µm aufgebracht wird.

12. Verfahren nach Anspruch 8, bei dem eine Schicht oder Folie aus Kohlenstoff und aus Phenolharzen, Furanharzen mit oder ohne Anteilen von Hexamethylentetramin aufgebracht wird oder es wird eine Schicht oder Folie aus Phenolharzen, Furanharzen mit oder ohne Anteilen von Hexamethylentetramin aufgebracht.

13. Verfahren nach Anspruch 8, bei dem eine Schicht oder Folie aus Kohlenstoff oder einem kohlenstoffenthaltenden Material oder aus einem Material, welches nach einer Temperaturerhöhung in Kohlenstoff überführt ist auf mindestens eine der zu fügenden Oberflächen aufgebracht wird, die mindestens eine Kohlenstoffausbeute von 10 Gew.-% bei Temperaturerhöhung aufweist.

14. Verfahren nach Anspruch 8, bei dem die Schichtaufbringung mittels Sprühen, Rakeln, Spritzen, Drucken, Gießen, Dippen, Laminieren und Pressen durchgeführt wird.

15. Verfahren nach Anspruch 8, bei dem eine Schicht oder Folie aus Kohlenstoff oder einem kohlenstoffenthaltenden Material oder aus einem Material, welches nach einer Temperaturerhöhung in Kohlenstoff überführt ist, die weiterhin pulverförmiges Siliciumcarbid aufweist, auf mindestens eine der zu fügenden Oberflächen aufgebracht wird, wobei vorteilhafterweise als pulverförmiges Siliciumcarbid ein Siliciumcarbid mit einer maximalen Partikelgröße eingesetzt wird, welche maximal der Hälfte der Dicke des Materials der Fügenaht entspricht.

## Claims

1. Reaction-joined ceramic components which consist of at least two structural elements which in the region of their surfaces to be joined consist of at least one dense material from the group of materials of nonoxidic ceramics and/or of at least one porous SiC material and the surfaces to be joined are in each case joined by material-to-material bonding to a dense material of the joining seam, which material consists of at least 30% by volume of silicon carbide and at least 8% by volume of silicon, and at least one of the structural elements has at least one hollow space which is not more than partly filled with silicon and/or a silicon alloy and joins the material of the joining seam or the silicon in the hollow space entirely or partly adjoins the material of the joining seam.

2. Components according to Claim 1, wherein carbide ceramics such as pressureless sintered SiC (SSiC), hot (isostatically) pressed SiC (HPSiC, HipSiC), liquid-phase-sintered SiC (LPSSiC), reaction-bonded silicon-infiltrated SiC (SiSiC, RBSiC), boron carbide (BC), tantalum carbide (TaC), titanium carbide (TiC), zirconium carbide (ZrC), hafnium carbide (HfC) and/or compounds thereof such as tantalum hafnium carbide (Ta₄HfC₅) are present as ceramic material.

3. Components according to Claim 1, wherein porous SiC materials such as recrystallized SiC (RSiC), reaction-bonded SiC (RBSiC) or SiC composites such as carbon-fibre-reinforced SiC (C_{f}SiC), SiC-fibre-reinforced SiC (SiC_{f}SiC) and/or diamond-SiC composites are present as ceramic material.

4. Components according to Claim 1, wherein the material of the joining seam consists of from 30 to 92% by volume of silicon carbide and from 8 to 70% by volume of silicon and/or the material of the joining seam further comprises carbon in the form of vitreous carbon, graphite, graphene, carbon black, diamond and/or cubic silicon carbide in addition to silicon carbide and silicon.

5. Components according to Claim 1, wherein the thickness of the material of the joining seam is 80-200 µm.

6. Components according to Claim 1, wherein a hollow space of a plurality of hollow spaces are present in the ceramic materials of the structural elements, with the hollow space or spaces being able to have any shapes.

7. Components according to Claim 1, wherein the hollow space or spaces are arranged exclusively in the region of the joining seam and adjoin the latter and/or, but at least partly, adjoin surfaces of the structural elements which are not joined.

8. Process for producing reaction-joined ceramic components, wherein
- at least two structural elements which in the region of their surfaces to be joined consist of at least one dense ceramic material from the group of nonoxidic ceramics and/or of at least one porous SiC material and of which at least one of the structural elements has, in the ceramic material, at least one hollow space which is open at least to the surface to be joined at least partly in the region of the surfaces to be joined, and
- the hollow space or spaces is/are subsequently filled with silicon and/or a silicon alloy, and
- at least one layer or film of an at least carbon-containing material or of at least one material which after an increase in temperature is converted into carbon is then applied to at least one of the surfaces to be joined, and
- the at least two structural elements which have been filled and coated in this way are subsequently brought into contact at their surfaces to be joined, and
- are together subjected to a temperature increase up to at least above the melting point of silicon or the silicon alloy used and subsequently cooled.

9. Process according to Claim 8, wherein carbide ceramics such as sintered SiC (SSiC),
hot (isostatically) pressed SiC (HPSiC, HipSiC), liquid-phase-sintered SiC (LPSSiC), reaction-bonded silicon-infiltrated SiC (SiSiC, RBSiC), boron carbide (BC), tantalum carbide (TaC), titanium carbide (TiC), zirconium carbide (ZrC), hafnium carbide (HfC) and/or compounds thereof such as tantalum hafnium carbide (Ta₄HfC₅) are present as ceramic material of the structural elements and/or porous SiC materials such as recrystallized SiC (RSiC), reaction-bonded SiC (RBSiC) or SiC composites such as carbon-fibre-reinforced SiC (C_{f}SiC), SiC-fibre-reinforced SiC (SiC_{f}SiC) and/or diamond-SiC composites are used as ceramic material of the structural elements.

10. Process according to Claim 8, wherein the hollow space or spaces in the at least two structural elements which have one or a plurality of hollow spaces in the ceramic materials and the hollow space or spaces have any shapes, have silicon and/or a silicon alloy introduced into the hollow space or spaces by means of doctor blade coating, spraying, printing, pressing, casting and/or spraying of silicon-comprising suspensions, granules or powders.

11. Process according to Claim 8, wherein a layer or film of at least one carbon or a carbon-containing material or of a material which can be converted after a temperature increase into carbon is applied to at least one of the surfaces to be joined, with the layer or the film advantageously being applied in a thickness of from 50 to 1000 µm.

12. Process according to Claim 8, wherein a layer or film of carbon and of phenolic resins, furan resins with or without proportions of hexamethylenetetramine is applied or a layer or film of phenolic resins, furan resins with or without proportions of hexamethylenetetramine is applied.

13. Process according to Claim 8, wherein a layer or film of carbon or a carbon-containing material or of a material which after a temperature increase is converted into carbon, which material has at least a carbon yield of 10% by weight in the temperature increase, is applied to at least one of the surfaces to be joined.

14. Process according to Claim 8, wherein the application of the layer is carried out by means of spraying, doctor blade coating, squirting, printing, casting, dipping, laminating and pressing.

15. Process according to Claim 8, wherein a layer or film of carbon or a carbon-containing material or of a material which after a temperature increase is converted into carbon, which material further comprises pulverulent silicon carbide, is applied to at least one of the surfaces to be joined, with a silicon carbide having a maximum particle size which corresponds to not more than half of the thickness of the material of the joining seam being advantageously used as pulverulent silicon carbide.

## Revendications

1. Composants céramiques assemblés par réaction, qui sont constitués par au moins deux éléments, qui sont constitués dans la zone de leurs surfaces à assembler par au moins un matériau dense du groupe de matériau des céramiques non oxydées et/ou par au moins un matériau SiC poreux et les surfaces à assembler sont respectivement reliées par accouplement de matière avec un matériau dense du joint d'assemblage, qui est constitué par au moins 30 % en volume de carbure de silicium et au moins 8 % en volume de silicium, et au moins un des éléments comprend au moins une cavité remplie au plus en partie avec du silicium et/ou un alliage de silicium, qui est adjacente au matériau du joint d'assemblage ou le silicium dans la cavité est adjacent en totalité ou en partie au matériau du joint d'assemblage.

2. Composants selon la revendication 1, dans lesquels des céramiques carbures telles que du SiC fritté sans pression (SSiC), du SiC pressé à chaud (isostatiquement) (HPSiC, HipSiC), du SiC fritté en phase liquide (LPSSiC), du SiC infiltré de silicium relié par réaction (SiSiC, RBSiC), du carbure de bore (BC), du carbure de tantale (TaC), du carbure de titane (TiC), du carbure de zirconium (ZrC), du carbure d'hafnium (HfC) et/ou leurs composés tels que par exemple le carbure de tantale et d'hafnium (Ta₄HfC₅) sont présents en tant que matériau céramique.

3. Composants selon la revendication 1, dans lesquels des matériaux SiC poreux, tels que du SiC recristallisé (RSiC), du SiC relié par réaction (RBSiC) ou également des composites de SiC, tels que du SiC renforcé par des fibres de carbone (C_{f}SiC), du SiC renforcé par des fibres de SiC (SiC_{f}SiC) et/ou des composites diamant-SiC sont présents en tant que matériau céramique.

4. Composants selon la revendication 1, dans lesquels le matériau du joint d'assemblage est constitué par 30 à 92 % en volume de carbure de silicium et 8 à 70 % en volume de silicium, et/ou le matériau du joint d'assemblage comprend en plus du carbure de silicium et du silicium également du carbone, sous la forme de carbone vitreux, de graphite, de graphène, de noir de carbone, de diamant et/ou de carbure de silicium cubique.

5. Composants selon la revendication 1, dans lesquels l'épaisseur du matériau du joint d'assemblage est de 80 à 200 µm.

6. Composants selon la revendication 1, dans lesquels une cavité ou une pluralité de cavités sont présentes dans les matériaux céramiques des éléments, la ou les cavités pouvant présenter des formes quelconques.

7. Composants selon la revendication 1, dans lesquels la ou les cavités sont agencées exclusivement dans la zone du joint d'assemblage et sont adjacentes à celui-ci et/ou, toutefois au plus en partie, sont adjacentes à des surfaces des éléments, qui ne sont pas assemblées.

8. Procédé de fabrication de composants céramiques assemblés par réaction, dans lequel
- au moins deux éléments sont utilisés, qui sont constitués dans la zone de leurs surfaces à assembler par au moins un matériau céramique dense du groupe des céramiques non oxydées et/ou par au moins un matériau SiC poreux, et parmi lesquels au moins un des éléments comprend au moins en partie dans la zone des surfaces à assembler dans le matériau céramique au moins une cavité ouverte au moins vers la surface à assembler, et
- ensuite, la ou les cavités sont remplies avec du silicium et/ou un alliage de silicium, et
- après, au moins une couche ou feuille en un matériau contenant au moins du carbone ou en au moins un matériau, qui est transformé en carbone après une élévation de température, est appliquée sur au moins une des surfaces à assembler, et
- ensuite, lesdits au moins deux éléments ainsi remplis et revêtus sont mis en contact au niveau de leurs surfaces à assembler, et
- sont exposés ensemble à une élévation de température jusqu'au moins au-dessus du point de fusion du silicium ou de l'alliage de silicium utilisé et ensuite refroidis.

9. Procédé selon la revendication 8, dans lequel des céramiques carbures, telles que du SiC fritté (SSiC), du SiC pressé à chaud (isostatiquement) (HPSiC, HipSiC), du SiC fritté en phase liquide (LPSSiC), du SiC infiltré de silicium relié par réaction (SiSiC, RBSiC), du carbure de bore (BC), du carbure de tantale (TaC), du carbure de titane (TiC), du carbure de zirconium (ZrC), du carbure d'hafnium (HfC) et/ou leurs composés tels que par exemple le carbure de tantale et d'hafnium (Ta₄HfC₅) sont utilisés en tant que matériau céramique des éléments et/ou des matériaux SiC poreux, tels que du SiC recristallisé (RSiC), du SiC relié par réaction (RBSiC) ou également des composites de SiC, tels que du SiC renforcé par des fibres de carbone (C_{f}SiC), du SiC renforcé par des fibres de SiC (SiC_{f}SiC) et/ou des composites diamant-SiC sont utilisés en tant que matériau céramique des éléments.

10. Procédé selon la revendication 8, dans lequel la ou les cavités dans lesdits au moins deux éléments, qui comprennent une ou une pluralité de cavités dans les matériaux céramiques et la ou les cavités présentent des formes quelconques, sont remplies avec du silicium et/ou un alliage de silicium par raclage, injection, compression, pressage, coulée et/ou pulvérisation de suspensions, granulats ou poudres contenant du silicium.

11. Procédé selon la revendication 8, dans lequel une couche ou feuille en au moins un carbone ou un matériau contenant du carbone ou en un matériau, qui est transformé en carbone après une élévation de température, est appliquée sur au moins une des surfaces à assembler, la couche ou la feuille étant avantageusement appliquée en une épaisseur de 50 à 1 000 µm.

12. Procédé selon la revendication 8, dans lequel une couche ou feuille en carbone et en résines de phénol, résines de furane avec ou sans fractions d'hexaméthylène-tétramine est appliquée, ou une couche ou feuille en résines de phénol, résines de furane avec ou sans fractions d'hexaméthylène-tétramine est appliquée.

13. Procédé selon la revendication 8, dans lequel une couche ou feuille en carbone ou un matériau contenant du carbone ou en un matériau, qui est transformé en carbone après une élévation de température, est appliquée sur au moins une des surfaces à assembler, qui présente au moins un rendement de carbone de 10 % en poids lors d'une élévation de température.

14. Procédé selon la revendication 8, dans lequel l'application de la couche est réalisée par pulvérisation, raclage, injection, compression, coulée, trempage, laminage et pressage.

15. Procédé selon la revendication 8, selon lequel une couche ou feuille en carbone ou un matériau contenant du carbone ou en un matériau, qui est transformé en carbone après une élévation de température, qui comprend en outre du carbure de silicium en poudre, est appliquée sur au moins une des surfaces à assembler, un carbure de silicium ayant une taille de particule maximale qui correspond au maximum à la moitié de l'épaisseur du matériau du joint d'assemblage étant avantageusement utilisé en tant que carbure de silicium en poudre.
